# EUROPÄISCHE PATENTANMELDUNG

(11) **EP 1 199 504 A2**
(43) Veröffentlichungstag der Anmeldung: **24.04.2002**
(21) Anmeldenummer: 01124771.5
(22) Anmeldetag: 17.10.2001
(51) Int. Cl.: F16L 5/08

(54) **Verdreh- und ausziehsichere Wanddurchführung zum Führen einer Medienleitung durch die Öffnung einer Wand**

(30) Priorität: 21.10.2000 DE 10052363
(71) Anmelder: Franz Schuck GmbH, 89555 Steinheim (DE)
(72) Erfinder: Schuck, Franz, 89518 Heidenheim (DE)
(74) Vertreter: Weitzel, Wolfgang, Dr.-Ing.

(57) **Zusammenfassung**

Die Erfindung betrifft eine Verdreh- und ausziehsichere Wanddurchführung zum Führen einer Medienleitung (1) durch die Öffnung (3.1) einer Wand (3)
- mit einem ringförmigen, gummielastischen Dichtelement (4), das die Medienleitung (1) umschließt und das in eingebautem Zustand von der Leibung der Öffnung (3.1) umschlossen ist;
- dem Dichtelement (4) ist eine Stauchvorrichtung zugeordnet, über die das Dichtelement (4) in axialer Richtung stauchbar und abdichtend gegen die Leibung der Öffnung (3.1) sowie gegen die Mantelfläche der Medienleitung (1) pressbar ist;
- die Mantelfläche weist wenigstens einen Vorsprung (3.5,3.6) auf;
- es ist ein scheibenförmiger Reiter (5) vorgesehen, der aus zwei Teilen besteht, die zum Aufsetzen auf die Medienleitung (1) vorgesehen und der auf der Medienleitung (1) verdrehfest und ausziehsicher festlegbar ist;
- der Reiter (5) weist an der Innenfläche mit der Anzahl und Form der Vorsprünge der Medienleitung (1) entsprechende Aussparungen auf, ferner eine Außenfläche, die von der Zylinderform abweicht;
- es ist eine Schelle (6) zur verdrehfesten und ausziehsicheren Aufnahme des Reiters (5) vorgesehen, deren Innenfläche komplementär zur Außenfläche des Reiters (5) ist, und die an der festen Umgebung gegen Verdrehen und axiales Verschieben fixierbar ist.

## Beschreibung

Die Erfindung betrifft eine Vorrichtung zum Führen einer Medienleitung durch die Öffnung einer Wand, beispielsweise durch die Mauer eines Gebäudes. Derartige Vorrichtungen werden auch als "Hauseinführungskombination" bezeichnet.

Als Medium kann es sich um flüssige oder feste Stoffe handeln. Die Medienleitung kann aber auch eine elektrische Leitung oder eine Datenleitung sein. Die vorliegende Erfindung betrifft insbesondere Vorrichtungen zum Einführen von Stadtgas in Gebäude.

Handelt es sich um Gas als Medium, so sind an die Vorrichtung in jeder Beziehung rigorose Anforderungen zu stellen. Dies betrifft vor allem die Dichtheit, und zwar auch über längere Zeiträume hinweg, die Dauerhaftigkeit sowie die Festigkeit gegen gewaltsames Herausziehen der Vorrichtung aus der Wand oder Verdrehen in der Wand, beispielsweise bei Straßenbauarbeiten.

Die Vorrichtung ist im allgemeinen mit einem Kugelhahn versehen, der mit der Medienleitung eine integrale Einheit bilden kann.

Es gibt zwei Verfahren, solche Vorrichtungen in eine Wand einzubauen. Beim Naßeinbau wird der Rohrabschnitt, der durch die Wand hindurchgeführt ist, einbetoniert. Der Naßeinbau hat den Nachteil des relativ großen Aufwandes sowie der Verschmutzung der Umgebung.

Der Erfinder ist daher vom Prinzip des Trockeneinbaus ausgegangen. Dabei wird ein ringförmiges, gummielastisches Dichtelement, das die Mediumleitung umschließt, in die Öffnung der Wand eingesetzt. Das Dichtelement wird sodann gestaucht, so daß es sich in radialer Richtung ausdehnt und einerseits an der Leibung der Öffnung, andererseits an der Umfangsfläche der Medienleitung stramm anliegt. Hierbei wird die Medienleitung durch Kraftschluß in der Wand fixiert. Dieser Kraftschluß reicht jedoch nicht immer aus beziehungsweise läßt sich nicht mit der notwendigen Zuverlässigkeit definieren, um die notwendige Auszieh- oder Verdrehfestigkeit zu gewährleisten.

EP 0 566 973 A1 beschreibt eine verdreh- und ausreißsichere Vorrichtung (Wanddurchführung) zum Führen einer Medienleitung durch die Öffnung einer Wand.

Aus DE 197 45 474 A1 ist eine ausreißsichere Vorrichtung (Wanddurchführung) zum Führen einer Medienleitung durch die Öffnung einer Wand bekannt, mit einem ringförmigen, gummielastischen Dichtelement (vgl. Fig.), das die Medienleitung umschließt und nach außen hin (hier Gewinderohr 6) abdichtet, wobei dem Dichtelement eine Staucheinrichtung (genauer: Spanneinrichtung) zugeordnet ist, die das Dichtelement in axialer Richtung staucht. Außerdem ist dort eine Mutter-Flanschausbildung 8, 9 vorgesehen, deren Innenfläche komplementär zur Oberfläche des Gewinderohrs 6 zum Fixieren des Rohrs 3 an der Wand 2 ausgebildet ist.

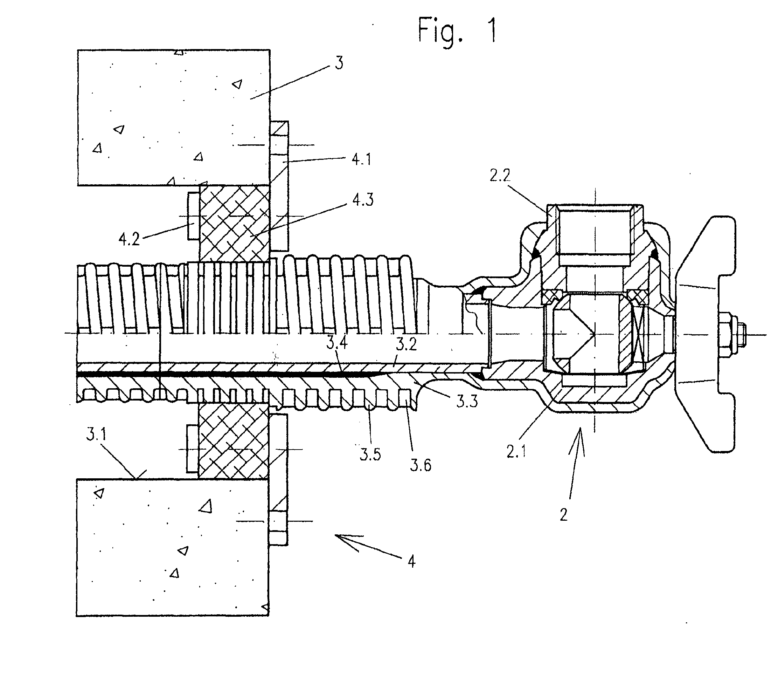

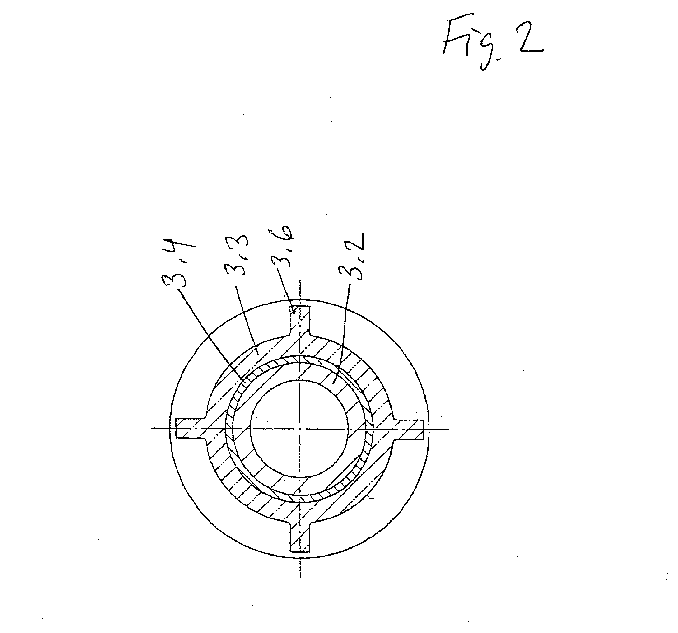

Aus DE 94 14 082 U1 ist eine ausreißsichere Vorrichtung zum Fixieren einer durch die Öffnung einer Wand geführten Medienleitung bekannt, wobei die Medienleitung mittels Schellen 16, 17 an der Wand fixiert wird (vgl. Fig. 1). Die Schellen sind zweiteilig ausgebildet und weisen an der Innenseite Rillen auf, die den an der Außenseite des Rohrs angepaßten Vorsprüngen entsprechen. Die Schellen sind auf die Außenseite des Rohrs aufsteckbar, wodurch ein Verschieben des Rohrs in Längsrichtung zusätzlich verhindert wird (vgl. S. 14, 3. Abs., unten). Die Schellen sind gegen ein Verdrehen fixierbar (Löcher 23 für eine Bolzenbefestigung an der Wand, Fig. 2).

Der Erfindung liegt die Aufgabe zugrunde, eine Vorrichtung der eingangs genannten Art, die nach dem Prinzip des Trockeneinbaus aufgebaut ist und demgemäß ein Dichtelement aufweist, derart zu gestalten, daß sie kostengünstig in der Herstellung ist, daß sie sich leicht und schnell in die Öffnung einer Wand einbauen läßt, daß sie auf Dauer die notwendige Dichtigkeit gewährleistet, daß sie absolut verdrehsicher und ausreißsicher ist, und daß sie von Fall zu Fall auch in beliebigen Winkelpositionen einbaubar ist.

Diese Aufgabe wird mit einer Vorrichtung gemäß Anspruch 1 gelöst.

Die entscheidenden Bauteile einer solchen Vorrichtung sind somit ein Reiter zum Aufsetzen auf die Medienleitung sowie eine Schelle zum Aufschieben auf den Reiter. Ferner ist wichtig, daß die Mantelfläche der Medienleitung wenigstens einen Vorsprung aufweist, und die Innenfläche des Reiters eine der Anzahl und Form der Vorsprünge entsprechenden Aussparung.

Im einfachsten Falle kann der Vorsprung der Mantelfläche ein zylindrischer Zapfen sein, und die Aussparung im Reiter eine entsprechende zylindrische Sackbohrung. Es können auch mehrere solcher Vorsprünge und Aussparungen vorgesehen werden. Diese können an verschiedenen Stellen der Länge der Medienleitung angeordnet werden. Hierdurch ist man beim Einbau der Vorrichtung flexibel, was im Hinblick auf unterschiedliche Wandstärken vorteilhaft ist.

Die Erfindung ist anhand der Zeichnung näher erläutert. Darin ist im einzelnen folgendes dargestellt:
- Figur 1: zeigt einen wesentlichen Teil einer Vorrichtung gemäß der Erfindung mit einem Kugelhahn, einer Standgasleitung sowie einem Dichtelement in einem Axialschnitt.
- Figur 2: zeigt einen achssenkrechten Schnitt durch die Gasleitung.
- Figur 3: zeigt in Seitenansicht einen Längenabschnitt der Gasleitung mit hierauf befindlichem Reiter sowie mit diesen umgebender Schelle.
- Figur 4: zeigt den Reiter mit der Schelle, gesehen in Richtung des Pfeiles A wie in Figur 3.

Die in Figur 1 dargestelle Vorrichtung umfaßt eine Gasleitung 1 zum Einführen von Stadtgas in ein Wohnhaus. Man erkennt einen Kugelhahn 2, der mit der Gasleitung 1 in leitender Verbindung steht. Die Gasleitung 1 ist durch eine Öffnung 3.1 in einer Wand 3 des Gebäudes hindurchgeführt. In der Öffnung 3.1 befindet sich ein Dichtelement 4, das die Leitung 1 umschließt.

Die Leitung 1 besteht aus einem inneren und einem äußeren Kunststoffmantel 3.2, 3.3 sowie aus einem Stahlrohr 3.4. Der äußere Mantel 3.3 ist in Figur 1 nach links weitergeführt, so daß er das Gehäuse 2.1 des Kugelhahn 2 umgibt.

Der äußere Kunststoffmantel 3.3 ist mit Umfangsrippen versehen. Dabei sind Umfangsrippen 3.5 in Figur 1 links des Dichtelementes 4 angeordnet. Sie verlaufen im vorliegenden Falle schraubenförmig. Sie könnten auch genau in Umfangsrichtung verlaufen. Auch könnten sie wesentlich größere Gewindesteigungen aufweisen.

Der äußere Kunststoffmantel 3.3 weist in dem genannten Abschnitt zwischen dem Dichtelement 4 und dem Kugelhahn 2 auch noch Längsrippen 3.6 auf. Siehe auch Figur 2. Die Längsrippen 3.6 erstrecken sich im vorliegenden Falle parallel zur Längsachse der Leitung 1. Sie könnten auch gegen die Längsachse geneigt sein.

Das Dichtelement 4 ist von bekanntem Aufbau. Es ist ringfömig und besteht aus gummielastischem Material. Es weist eine Staucheinrichtung auf, einerseits umfassend eine Abdeckplatte 4.1, die sich auf der dem Kugelhahn 2 zugewandten Seite des Dichtelementes 4 befindet, andererseits eine Gegenplatte 4.2, die auch aus einer Vielzahl von Segmenten bestehen kann. Durch das Dichtelement 4 sowie durch die Abdeckplatte 4.1 und die Gegenplatte 4.2 sind Spannschrauben hindurchgeführt - hier lediglich durch strichpunktierte Linien 4.3 angedeutet. Durch hier nicht gezeigte Muttern lassen sich die Spannschrauben auf der Seite der Abdeckplatte 4.1 anziehen, so daß ein Stauchen des Dichtelementes 4 erfolgt, und damit ein Verspannen der Leitung 1.

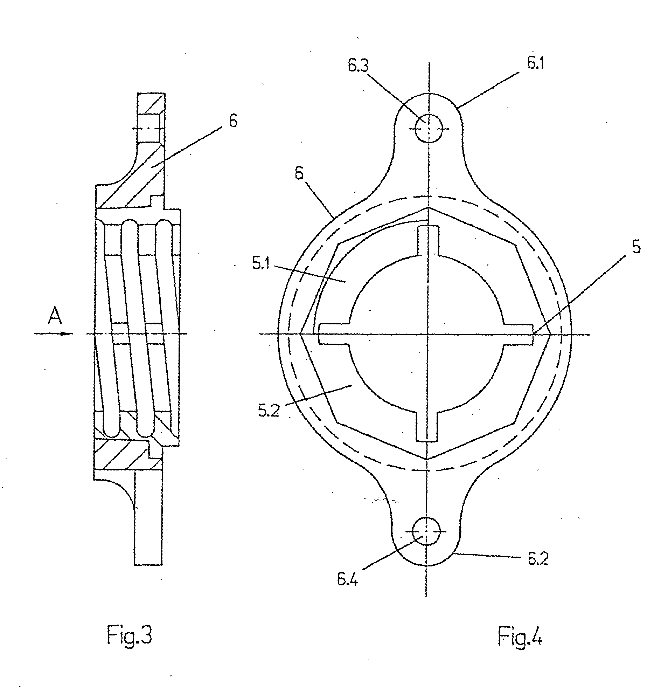

Ganz wesentliche Bauteile ergeben sich auch aus den Figuren 3 und 4, nämlich ein Reiter 5 sowie eine Schelle 6. Der Reiter 5 ist aus zwei identischen Teilen 5.1, 5.2 zusammengefügt. Diese beiden Teile weisen jeweils eine Innenfläche auf, die mit der Anzahl und der Form der Umfangsrippen 3.5 sowie der Längsrippen 3.6 übereinstimmen. Demgemäß lassen sich die Reiterteile 5.1, 5.2 auf den äußeren Kunststoffmantel 3.3 der Leitung 1 aufstecken, so daß sie ebenfalls an den Umfangsrippen 3.5 und den Längsrippen 3.6 satt und formschlüssig anliegen.

Die Außenkontur der beiden Reiterteile 5.1, 5.2 ist ebenfalls in besonderer Weise gestaltet. Wie man aus Figur 4 erkennt, stellt die Außenfläche der Reiterteile 5.1, 5.2 ein Achteck dar.

Die Schelle 6 weist eine Innenkontur auf, die komplementär zur Außenfläche des Reiters 5 ist. Demgemäß ist die Innenkontur ebenfalls aus einem Achteck gebildet.

Es wäre auch möglich, jegliche andere Kontur für die Außenfläche des Reiters 5 beziehungsweise die Innenfläche der Schelle 6 vorzusehen, so lange diese Kontur von der Kreisform beziehungsweise Zylinderform abweicht.

In aufgestecktem Zustand des Reiters 5 (beziehungsweise seiner beiden Teile 5.1, 5.2) und im zugleich aufgeschobenem Zustand der Schelle 6 sind diese beiden mit dem Außenmantel 3.3 der Leitung 1 sowohl drehfest als auch in axialer Richtung verschiebefest vereinigt.

Wie man aus den Figuren 3 und 4 erkennt, weist die Schelle 6 Ohren 6.1, 6.2, mit Bohrungen 6.3, 6.4 auf. Durch die Bohrungen 6.3, 6.4 werden zum Zwecke der Montage Schrauben hindurchgeführt, die in die Abdeckplatte 4.1 des Dichtelementes 4 hineingeschraubt und damit fixiert werden. Da das Dichtelement 4 seinerseits in der Wand 3 fixiert ist, ist auch die Leitung 1 örtlich absolut festgelegt. Sie kann auch durch Einwirkung hoher Kräfte weder um ihre eigene Längsachse verdreht, noch in Richtung dieser Längsachse verschoben werden. Sie kann aber gleichwohl gelöst werden, und zwar durch Lösen der genannten, durch die Bohrungen 6.3, 6.4 hindurchzuführenden Schrauben. Auch ist es möglich, die Leitung 1 in anderen Winkelpositionen zu fixieren, als dies in Figur 1 gezeigt ist. So könnte beispielsweise der in Figur 1 ersichtliche Gehäuseanschluß 2.2 statt senkrecht nach unten nach der Seite oder nach oben gerichtet sein.

Statt der Umfangsrippen 3.5 und der Längsrippen 3.6 im äußeren Mantel 3.3 der Leitung 1 könnte der Mantel 3.3 auch andere Vorsprünge aufweisen, beispielsweise ganz einfache Zapfen, denen Aussparungen in der inneren Umfangsfläche des Reiters 5 entsprechen, indem sie zu dem Zapfen komplementär gestaltet und angeordnet sind.

## Patentansprüche

1. Verdreh- und ausziehsichere Wanddurchführung zum Führen einer Medienleitung (1) durch die Öffnung (3.1) einer Wand (3);
1.1 mit einem ringförmigen, gummielastischen Dichtelement (4), das die Medienleitung (1) umschließt und das in eingebautem Zustand von der Leibung der Öffnung (3.1) umschlossen ist;
1.2 dem Dichtelement (4) ist eine Stauchvorrichtung zugeordnet, über die das Dichtelement (4) in axialer Richtung stauchbar und abdichtend gegen die Leibung der Öffnung (3.1) sowie gegen die Mantelfläche der Medienleitung (1) pressbar ist;
1.3 die Mantelfläche weist wenigstens einen Vorsprung (3.5, 3.6) auf;
1.4 es ist ein scheibenförmiger Reiter (5) vorgesehen, der aus zwei Teilen besteht, die zum Aufsetzen auf die Medienleitung (1) vorgesehen und der auf der Medienleitung (1) verdrehfest und ausziehsicher festlegbar ist;
1.5 der Reiter (5) weist an der Innenfläche mit der Anzahl und Form der Vorsprünge der Medienleitung (1) entsprechende Aussparungen auf, ferner eine Außenfläche, die von der Zylinderform abweicht;
1.6 es ist eine Schelle (6) zur verdrehfesten und ausziehsicheren Aufnahme des Reiters (5) vorgesehen, deren Innenfläche komplementär zur Außenfläche des Reiters (5) ist, und die an der festen Umgebung (Abdeckplatte 4.1) gegen Verdrehen und axiales Verschieben fixierbar ist.

2. Vorrichtung nach Anspruch 1, **dadurch gekennzeichnet, daß** die Mantelfläche der Medienleitung als Vorsprünge Umfangsrippen (3.5) und Längsrippen (3.6) aufweisen.

3. Vorrichtung nach Anspruch 1, **dadurch gekennzeichnet, daß** die Mantelfläche der Medienleitung (1) als Vorsprünge Zapfen aufweist.

4. Vorrichtung nach einem der Ansprüche 1 bis 3, **dadurch gekennzeichnet, daß** die Mantelfläche der Medienleitung (1) aus einer Kunststoffbeschichtung gebildet ist.

5. Vorrichtung nach einem der Ansprüche 1 bis 4, **dadurch gekennzeichnet, daß** die Außenfläche des Reiters (5) sowie die Innenfläche der Schelle (6) jeweils ein Polygon ist.

6. Vorrichtung nach einem der Ansprüche 1 bis 5, **dadurch gekennzeichnet, daß** der Reiter aus Ringsegmenten besteht.
